# EUROPÄISCHE PATENTANMELDUNG

(11) **EP 2 813 455 A1**
(43) Veröffentlichungstag der Anmeldung: **17.12.2014**
(21) Anmeldenummer: 13405067.3
(22) Anmeldetag: 11.06.2013
(51) Int. Cl.: B65H 75/36

(54) **Kabelhalter und Kabelanordnung**

(71) Anmelder: Lista Office AG, 9113 Degersheim (CH)
(72) Erfinder: Schaible, Renato, CH-8113 Degersheim (CH); Hollenstein, Michael, CH-9113 Degersheim (CH); Dubach, Fredi, CH-9113 Degersheim (CH)
(74) Vertreter: Wagner, Wolfgang Heribert

(57) **Zusammenfassung**

Eine Basis (1) trägt auf einer Grundplatte (2) eine Rollenanordnung mit einer festen ersten Achse (7) und einer verschiebbaren zweiten Achse (12) zur Aufnahme eines Kabels (13). Die zweite Achse (12) wird durch eine Gasdruckfeder (14) mit einer auf einen Einzug des Kabels (13) hinwirkenden elastischen Kraft beaufschlagt. Das Kabel (13) ist durch einen Auslass (26) nach aussen geführt, der an der Aussenseite durch eine auf die Basis (1) aufgesteckte Abdeckung (19) berandet wird, sodass nach Abnahme derselben der Auslass (26) seitlich offen ist und das Kabel (13) ausgewechselt werden kann. Ein Klemmechanismus (18) hält das Kabel (13) fest, derart, dass es zwar gegen die Kraft der Gasdruckfeder (14) ausziehbar, aber nicht durch diese einziehbar ist. Er kann aber durch Druck auf einen Betätigungsknopf (35) gelöst werden, worauf das Kabel (13) vollständig eingezogen wird. Wenn die zweite Achse (12) eine Einzugsstellung erreicht, wird der Klemmechanismus (18) in die Klemmposition zurückgestellt.

## Beschreibung

### Technisches Gebiet

Die Erfindung betrifft einen Kabelhalter für ein Kabel, insbesondere ein Kabel zur Datenübertragung oder ein Stromkabel, sowie eine Kabelanordnung mit einem derartigen Kabelhalter.

### Stand der Technik

Es sind gattungsgemässe Kabelbalter bekannt bei denen ein Auslass für das Kabel vorgesehen ist, welcher als Loch in einer Frontplatte ausgebildet ist. Da der mit dem Kabelende verbundene Stecker wegen seiner grösseren Abmessungen nicht durch den Auslass gezogen werden kann, ist bei Kabelhaltern dieser Art ein Auswechseln des Kabels gewöhnlich nicht möglich oder jedenfalls mit beträchtlichen Schwierigkeiten verbunden.

### Darstellung der Erfindung

Der Erfindung liegt die Aufgabe zu Grunde, einen gattungsgemässen Kabelhalter anzugeben, bei dem ein Auswechseln des Kabels ohne weiteres möglich ist. Diese Aufgabe wird durch die Erfindung, wie sie in den Ansprüchen gekennzeichnet ist, gelöst. Ausserdem wird eine Kabelanordnung angegeben, welche einen erfindungsgemässen Kabelhalter sowie ein in denselben eingesetztes Kabel umfasst.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine Explosionsdarstellung einer erfindungsgemässen Kabelanordnung bestehend aus einem erfindungsgemässen Kabelhalter und einem Kabel,
- Fig. 2: eine Ansicht der erfindungsgemässen Kabelanordnung gemäss Fig. 1 schräg von vorn,
- Fig. 3: eine im wesentlichen Fig. 2 entsprechende Ansicht, wobei eine Abdeckung des Kabelhalters abgehoben ist,
- Fig. 4: vergrössert eine Seitenansicht eines Klemmechanismus, und
- Fig. 5: eine Draufsicht auf den Klemmechanismus von Fig. 4.

### Wege zur Ausführung der Erfindung

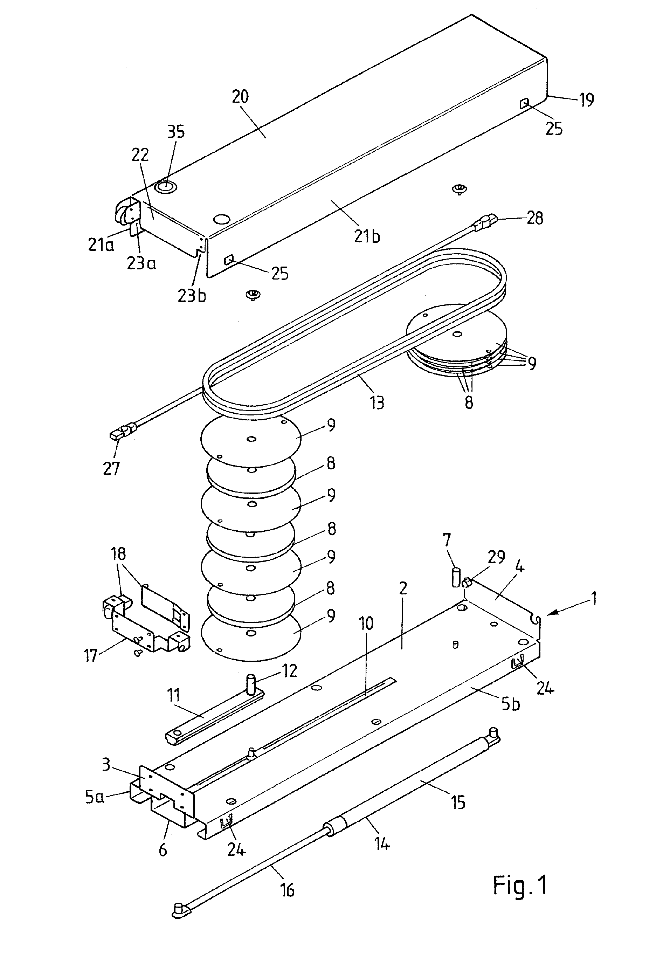

Die in den Figuren 1 bis 3 dargestellte Kabelanordnung umfasst einen Kabelhalter, der eine Basis 1 aufweist mit einer Grundplatte 2, welche an einem vorderen Ende eine Frontplatte 3 trägt, die sich nicht über die ganze Breite der Grundplatte 2 erstreckt und an einem hinteren Ende einen hinteren Flansch 4. Seitlich sind nach unten abgebogene Seitenflansche 5a,b angeformt, welche die Montage des Kabelhalters z.B. an einem Schreibtisch erleichtern. An der Unterseite der Grundplatte 2 ist ein U-Profil 6 angebracht, welches einen Kanal umschliesst. In der Nähe ihres hinteren Endes ist eine feste erste Achse 7 an der Grundplatte 2 angebracht, welche mehrere übereinander angeordnete Rollen 8 trägt, die unabhängig voneinander frei drehbar sind. Zwischen benachbarten Rollen sowie am oberen und unteren Ende des Rollenstapels ist jeweils eine Führungsscheibe 9 grösseren Durchmessers angeordnet. Von nahe dem vorderen Ende der Grundplatte 2 geht ein Längsschlitz 10 aus, der eine Führung für einen längsverschiebbaren länglichen Schlitten 11 bildet. In der Nähe seines hinteren Endes ist eine gegenüber der ersten Achse 7 verschiebbare zweite Achse 12 angebracht. Sie trägt ebenso wie jene unabhängig voneinander frei drehbare Rollen 8 und Führungsscheiben 9. Die Rollen 8 auf der ersten Achse 7 und der zweiten Achse 12 bilden eine Rollenanordnung, welche ein Kabel 13 der Kabelanordnung aufnimmt. Das Kabel 13 kann etwa ein für Datenübertragung geeignetes Kabel, also z.B. ein Koaxialkabel oder ein Glasfaserkabel sein oder auch ein Stromkabel.

Im Kanal an der Unterseite der Grundplatte 2 ist eine Gasdruckfeder 14 angeordnet, mit einem Gehäuse 15, dessen hinteres Ende mit der Grundplatte 2 verbunden ist und einem Kolben 16, dessen vorderes Ende am Schlitten 11 angreift. Sie beaufschlagt ihn mit einer gegen das vordere Ende der Grundplatte 2 gerichteten elastischen Kraft, die folglich auf eine Vergrösserung der Entfernung zwischen der zweiten Achse 12 von der ersten Achse 7 hinwirkt. An der Innenseite der Frontplatte 3 ist eine Halterung 17 angeschraubt, welche einen lösbaren Klemmechanismus 18 trägt.

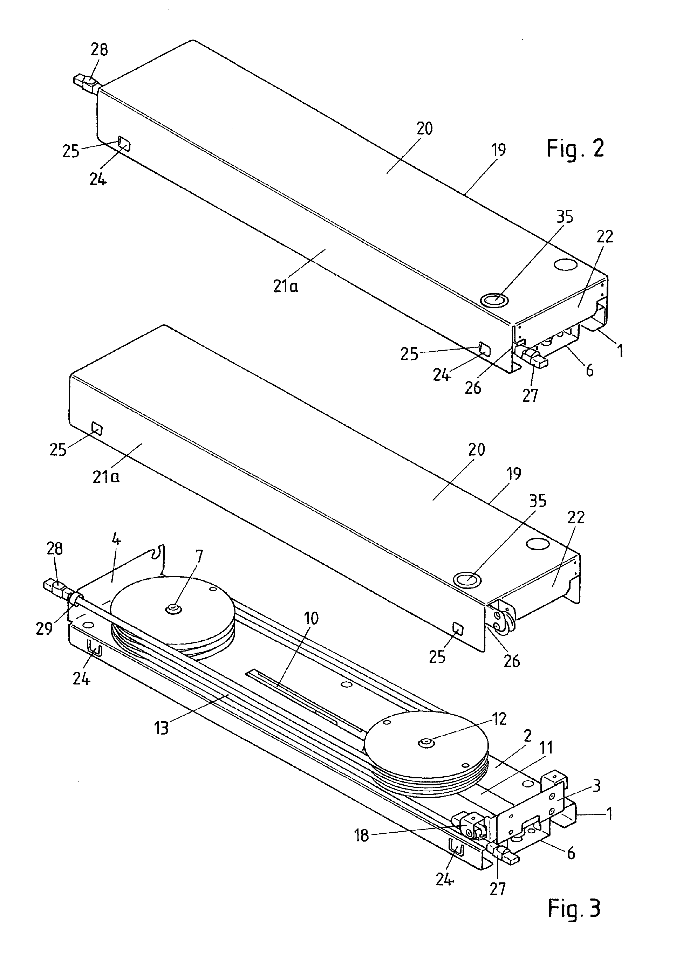

Eine Abdeckung 19 umfasst einen ebenen rechteckigen Deckel 20 sowie zwei an Seitenrändern desselben angeformte nach unten weisende Seitenwände 21a,b und eine an einem vorderen Rand angeformte Frontwand 22, welche beidseitig von einem unteren Rand ausgehende Ausnehmungen 23a,b aufweist. Oberhalb der linken Ausnehmung 23a ist eine Halterung mit einer Umlenkrolle angeschraubt (in Fig. 2 weggelassen), welche jedoch auch fehlen kann. Die Abdeckung 19 kann auf die Basis 1 aufgesteckt werden, derart, dass die Innenseiten der Seitenwände 21a,b an den Aussenseiten der Seitenflansche 5a,b mit leichtem Druck anliegen. Diese reibschlüssige Verbindung wird durch Eingriff federnder Fortsätze 24 an den Seitenflanschen 5a,b in Oeffnungen 25 in den Seitenwänden 21a,b unterstützt. Zugleich liegt die Innenseite der Frontwand 22 an der Aussenseite der Frontplatte 3 an, wobei die Ausnehmungen 23a,b seitlich der Frontplatte 3 Öffnungen bilden, die an den Aussenseiten lediglich durch die Seitenwände 21a;b der Abdeckung 19 begrenzt sind, sodass sie bei abgenommener Abdeckung 19 seitlich offen sind. Die linke Öffnung dient als Auslass 26 (Fig. 2) für das Kabel 13.

Das Kabel 13 trägt an einem vorderen Ende einen Stecker 27 und an einem entgegengesetzten hinteren Ende einen entsprechenden Stecker 28. Das hintere Ende des Kabels 13 ist durch eine Kabeltülle 29 geführt, die in einer gegen oben offenen Ausnehmung im hinteren Flansch 4 liegt. Bei abgenommener Abdeckung 19 kann das Kabel 13 samt der Kabeltülle 29 nach oben aus der Ausnehmung gezogen werden. Das vordere Ende des Kabels 13 ist durch den Auslass 26 gezogen, dessen Durchmesser kleiner ist als der des Steckers 27. Da er an der Aussenseite nur durch die Seitenwand 21a begrenzt wird, ist er bei abgenommener Abdeckung 19 dort seitlich offen (Fig. 3), sodass dann das Kabel 13 seitlich aus dem Auslass 26 herausgezogen werden kann.

Das Kabel 13 läuft vom Auslass 26 über die unterste der Rollen 8 an der zweiten Achse 12 und dann um die unterste der Rollen 8 an der ersten Achse 7, um die zweitunterste der Rollen 8 an der zweiten Achse 12, um die zweitunterste der Rollen 8 an der ersten Achse 7 usw. und schliesslich über die oberste der Rollen 8 an der ersten Achse 7, also abwechselnd über Rollen 8 an den beiden Achsen, so dass die Kabellänge eines jeden vollen Umlaufs zwei halbe Rollenumfänge und zwei Mal den Abstand zwischen der ersten Achse 7 und der zweiten Achse 12 beträgt.

Wird also die zweite Achse 12 von einer Auszugsstellung, bei der sie um nur wenig mehr als den Durchmesser einer Führungsscheibe 9 von der ersten Achse 7 beabstandet ist, durch Einwirkung der Gasdruckfeder 14 auf den Schlitten 11 in eine Einzugsstellung in der Nähe der Frontplatte 3 verschoben, in der der Abstand von der ersten Achse 7 um eine Länge x grösser ist, so verlängert sich der auf der Rollenanordnung aufgewickelte Abschnitt des Kabels 13 um (2u+1)x, wobei u die Anzahl der vollen Umläufe bedeutet(im Beispiel ist u=3). Bei einer solchen Verschiebung wird das Kabel 13 um die entsprechende Länge eingezogen. Der Stecker 27 liegt dann knapp ausserhalb des Auslasses 26. Umgekehrt bewirkt ein Ziehen am Stecker 27 eine Verschiebung der zweiten Achse 12 aus der Einzugsstellung gegen die Auszugsstellung hin, entgegen der von der Gasdruckfeder 14 auf den Schlitten 11 ausgeübten Kraft.

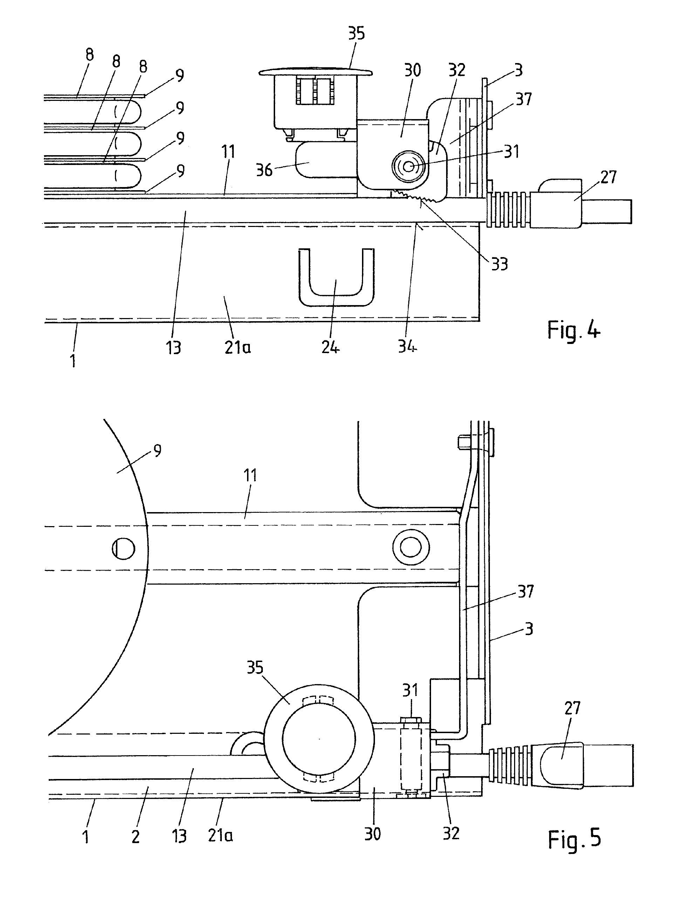

Der in Fig. 4, 5 genauer dargestellte lösbare Klemmechanismus 18 umfasst ein Lager 30 für einen um eine Querachse 31 drehbar an derselben gelagerten Klemmhebel 32, der zwischen einer in Fig. 4, 5 dargestellten Klemmstellung, in der er mit einer geriffelten Klemmfläche 33 das Kabel 13 gegen eine Gegenfläche 34 an der Oberseite der Grundplatte 2 drückt und dadurch fixiert und einer Offenstellung, in der die Klemmfläche 33 einen Abstand von der Gegenfläche 34 aufweist, der grösser ist als der Durchmesser des Kabels 13, umstellbar ist. Der Klemmhebel 32 ist durch eine die Querachse 31 umgebende Spiralfeder (nicht dargestellt) mit einem Drehmoment beaufschlagt, das geeignet ist, ihn im Uhrzeigersinn zu drehen, d.h., er ist gegen die Klemmstellung hin vorgespannt. Die etwas konvex gerundete Klemmfläche 33 steigt in der Klemmstellung schräg nach hinten an, sodass ein Ausziehen des Kabels 13 möglich ist, ein Einziehen aber einer Selbsthemmung unterliegt.

Durch Druck auf einen vertikal verschiebbar in einer Oeffnung des Deckels 20 gelagerten Betätigungsknopf 35 kann jedoch derart auf einen Betätigungsfortsatz 36 des Klemmhebels 32 eingewirkt werden, dass die Klemmung gelöst wird. Wird der Betätigungsknopf 35 ganz nach unten gedrückt, so wird der Klemmhebel 32 durch eine Feststellfeder 37, deren umgebogener Endabschnitt dann unter eine Rastfläche (nicht dargestellt) an demselben einfedert, in der Offenstellung fixiert. Das Kabel 13 wird dann durch die Einwirkung der Gasdruckfeder 14 auf den Schlitten 11 vollständig eingezogen. Wenn sich der Schlitten 11 schon nahe an der Einzugsstellung befindet, stösst er mit einem vorderen Ende an die Feststellfeder 37 und drückt sie nach vorn, sodass ihr Endabschnitt von der Rastfläche des Klemmhebels 32 zurückgezogen wird und derselbe unter der Einwirkung der Spiralfeder wieder in die Klemmstellung kippt, in der er das Kabel 13 klemmt. Der Betätigungsknopf 35 wird dabei durch den Betätigungsfortsatz 36 nach oben in seine Ausgangsstellung geschoben.

Soll das Kabel 13 der Kabelanordnung ausgewechselt werden, so genügt es, die Abdeckung 19 des Kabelhalters abzunehmen, das vordere Ende des Kabels seitlich aus dem Auslass 26 und das hintere Ende mit der Kabeltülle 29 aus der Ausnehmung am hinteren Flansch 4 zu ziehen und dann das Kabel 13 von der Rollenanordnung abzunehmen. Anschliessend kann ein anderes Kabel in analoger Weise am Kabelhalter montiert werden.

Es sind im Rahmen der Erfindung verschiedene Abweichungen von der dargestellten Ausführung möglich. So kann etwa die Abdeckung auch aufschiebbar oder kippbar ausgeführt sein. Der Auslass kann, wenn die Abdeckung abgenommen ist, statt an der Aussenseite oben offen sein, er kann auch in einer solchen Weise geschlossen sein, dass er nach Abnehmen der Abdeckung zwar noch nicht offen, aber leicht zu öffnen ist. Die gezeigte Lösung ist jedoch besonders bequem. Statt einer Gasdruckfeder könnte auch ein anderes eine elastische Kraft ausübendes Element eingesetzt werden, doch ist die Gasdruckfeder besonders platzsparend und funktionssicher. Auch die Rollenanordnung könnte anders ausgebildet sein, z.B. aus einer einzigen mit einer auf einen Einzug des Kabels hinwirkenden elastischen Kraft beaufschlagten Rolle bestehen.

### Bezugszeichenliste

- 1: Basis
- 2: Grundplatte
- 3: Frontplatte
- 4: hinterer Flansch
- 5a,b: Seitenflansche
- 6: U-Profil
- 7: erste Achse
- 8: Rolle
- 9: Führungsscheibe
- 10: Längsschlitz
- 11: Schlitten
- 12: zweite Achse
- 13: Kabel
- 14: Gasdruckfeder
- 15: Gehäuse
- 16: Kolben
- 17: Halterung
- 18: Klemmechanismus
- 19: Abdeckung
- 20: Deckel
- 21a,b: Seitenwände
- 22: Frontwand
- 23a,b: Ausnehmungen
- 24: Fortsatz
- 25: Oeffnung
- 26: Auslass
- 27: Stecker
- 28: Stecker
- 29: Kabeltülle
- 30: Lager
- 31: Querachse
- 32: Klemmhebel
- 33: Klemmfläche
- 34: Gegenfläche
- 35: Betätigungsknopf
- 36: Betätigungsfortsatz
- 37: Feststellfeder

## Patentansprüche

1. Kabelhalter für ein ausziehbares Kabel (13), mit einem Gehäuse, das an einer Frontseite einen Auslass (26) für das Kabel (13) aufweist sowie mit einer Rollenanordnung zur Aufnahme des Kabels (13), die mit einer auf einen Einzug des Kabels (13) hinwirkenden elastischen Kraft beaufschlagt ist, wobei das Gehäuse eine Basis (1) umfasst mit einer Grundplatte (2), welche die Rollenanordnung trägt, sowie eine abnehmbar an der Basis angebrachte Abdeckung (19), welche die Grundplatte (2) und die Rollenanordnung bedeckt, **dadurch gekennzeichnet, dass** der Auslass (26) zum Teil durch die Basis (1) und zum Teil durch die Abdeckung (19) begrenzt ist, derart, dass er nach Abnehmen der Abdeckung (19) offen oder zu öffnen ist.

2. Kabelhalter nach Anspruch 1, **dadurch gekennzeichnet, dass** die Abdeckung (19) einen Deckel (20) umfasst sowie von Seitenrändern des Deckels (20) nach unten abragende Seitenwände (21a, 21b), von denen eine den Auslass (26) an einer Aussenseite begrenzt.

3. Kabelhalter nach Anspruch 1 oder 2, **dadurch gekennzeichnet, dass** die Abdeckung (19) auf die Basis (1) aufgesteckt oder aufgeschoben ist.

4. Kabelhalter nach einem der Ansprüche 1 bis 3, **dadurch gekennzeichnet, dass** die Rollenanordnung zwei Achsen umfasst, deren jede mindestens eine frei drehbare Rolle (8) trägt und von denen mindestens eine durch die elastische Kraft im Sinne einer Vergrösserung der Entfernung zwischen den Achsen verschiebbar ist.

5. Kabelhalter nach Anspruch 4, **dadurch gekennzeichnet, dass** jede Achse mehrere übereinander angeordnete Rollen (8) trägt, wobei aufeinanderfolgende Rollen (8) jeweils durch eine Führungsscheibe (9) grösseren Durchmessers voneinander getrennt sind.

6. Kabelhalter nach Anspruch 4 oder 5, **dadurch gekennzeichnet, dass** eine feste erste Achse (7) an der Basis (1) verankert ist, während eine verschiebbare zweite Achse (12) an einem Schlitten (11) verankert ist, welcher längs einer Führung an der Basis (1) zwischen einer Auszugsstellung und einer Einzugsstellung verschiebbar ist.

7. Kabelhalter nach Anspruch 5 oder 6, **dadurch gekennzeichnet, dass** die elastische Kraft durch eine Gasdruckfeder (14) erzeugt wird, welche im Sinne einer Verschiebung gegen die Einzugsstellung auf die mindestens eine verschiebbare Achse einwirkt.

8. Kabelhalter nach den Ansprüchen 6 und 7, **dadurch gekennzeichnet, dass** ein Gehäuse (15) der Gasdruckfeder (14) an der Grundplatte (2) verankert ist und ein Kolben (16) derselben am Schlitten (11) angreift.

9. Kabelhalter nach Anspruch 7 oder 8, **dadurch gekennzeichnet, dass** die Gasdruckfeder (14) an der Unterseite der Grundplatte (2) angeordnet ist.

10. Kabelhalter nach einem der Ansprüche 1 bis 9, **dadurch gekennzeichnet, dass** im Gehäuse zwischen dem Auslass (26) und der Rollenanordnung ein Klemmechanismus (18) angeordnet ist, welcher zwischen einer Klemmstellung, in der er geeignet ist, das Kabel (13) zu klemmen und einer Offenstellung, in welcher er das Kabel (13) frei lässt, umstellbar ist.

11. Kabelhalter nach Anspruch 10, **dadurch gekennzeichnet, dass** Klemmechanismus (18) einen Klemmhebel (32) mit einer Klemmfläche (33) umfasst, welcher geeignet ist, das Kabel (13) in der Klemmstellung zwischen der Klemmfläche (33) und einer Gegenfläche (34) zu klemmen und der gegen die Klemmstellung hin vorgespannt ist, aber durch eine Feststellfeder (37), welche dann an einer Rastfläche am Klemmhebel (32) anliegt, in der Offenstellung arretierbar ist.

12. Kabelhalter nach den Ansprüchen 6 und 11, **dadurch gekennzeichnet, dass** die Arretierung des Klemmhebels (30) durch den Schlitten (11) lösbar ist, indem derselbe derart mit der Feststellfeder (37) wirkverbunden ist, dass sie, wenn der Schlitten (11) sich der Einzugsstellung nähert, von der Rastfläche zurückgezogen wird.

13. Kabelhalter nach einem der Ansprüche 1 bis 12, **dadurch gekennzeichnet, dass** in der Abdeckung (19) ein Betätigungsknopf (35) verschieblich gelagert ist, der mit dem Klemmhebel (32) wirkverbunden ist.

14. Kabelanordnung mit einem Kabelhalter nach einem der Ansprüche 1 bis 13 sowie mit einem Kabel (13), welches zum Teil auf der Rollenanordnung aufgewickelt ist, während ein vorderes Endstück des Kabels (13) durch den Auslass (26) nach aussen gezogen ist.

15. Kabelanordnung nach Anspruch 14, mit einem Kabelhalter nach einem der Ansprüche 4 bis 13, **dadurch gekennzeichnet, dass** das Kabel (13) abwechselnd über eine Rolle (8) auf der ersten Achse (7) und eine Rolle (8) auf der zweiten Achse (12) läuft.
